# EUROPEAN PATENT SPECIFICATION

(11) **EP 3 890 053 B1**
(45) Date of publication and mention of the grant of the patent: **08.11.2023**
(21) Application number: 19905573.2
(22) Date of filing: 25.03.2019
(51) Int. Cl.: H01M 10/6554, H01M 10/658, H01M 10/659, H01M 50/209, H01M 50/262, H01M 50/276, H01M 50/282, H01M 50/383, A62C 35/10, A62C 3/07, A62C 3/16, H01M 50/342

(54) **BATTERY PACK**
BATTERIEPACK
BLOC-BATTERIE

(30) Priority: 28.12.2018 CN 201822238925 U
(43) Date of publication of application: 06.10.2021
(73) Proprietor: Contemporary Amperex Technology Co., Limited, Ningde, Fujian 352100 (CN)
(72) Inventor: YOU, Kaijie, Ningde, Fujian 352100 (CN); WANG, Peng, Ningde, Fujian 352100 (CN); JIN, Haizu, Ningde, Fujian 352100 (CN); SHI, Dongyang, Ningde, Fujian 352100 (CN); LI, Zhenhua, Ningde, Fujian 352100 (CN); CHEN, Ning, Ningde, Fujian 352100 (CN); HU, Fei, Ningde, Fujian 352100 (CN)
(74) Representative: Herrero & Asociados, S.L.
(86) International application number: PCT/CN2019/079500
(87) International publication number: WO 2020/133750

(56) References cited:
- EP-A1- 2 704 802
- CN-U- 207 474 524

## Description

### TECHNICAL FIELD

The invention relates to the field of batteries, and in particular, to a battery pack.

### BACKGROUND

In electric vehicles, a battery is a core component, and its safety has been widely concerned. The thermal runaway of a battery is extremely dangerous, threatening lives of passengers. And due to a huge impact of the thermal runaway, it may undermine consumer confidence in the electric vehicles. At present, in order to suppress the thermal runaway of the battery, a complicated fire extinguishing fluid pipeline is arranged in a battery pack, but it is difficult to design and assembly, and with a high cost and a low energy density. In addition, fire extinguishing fluid is kept in a free space inside the battery pack. In the process of running a vehicle, the fire extinguishing fluid can easily flow to all directions, and adhere to other parts, so that the effective fire extinguishing fluid in the battery pack become less and less, and at the moment of the thermal runaway, the fire extinguishing fluid may be located outside an area where a runaway occurs, as a result, a thermal runaway source cannot be effectively and timely extinguished or doused (for example, a high-temperature gas and/or flame generated inside the battery, the high-temperature gas may be doped with substances such as an electrolyte inside the battery). Refractories are arranged at and/or near an explosion-proof valve of the battery to resist the high-temperature and/or flame sprayed from the explosion-proof valve, but it is easy to make the thermal runaway diffuse in the battery pack, resulting in more and more battery thermal runaways, and increasing a risk of the thermal runaway.

CN108140773A provides a battery pack, comprising: a battery module that includes one or more battery cells; a pack case that is made of a metal material and that is for packaging the battery module; and a fire extinguishing liquid induction cover that covers one side of the pack case, that forms an opening by melting at a pre-determined or greater temperature so as to let the fire-extinguishing liquid into the inside of the pack case, and that has a noise shield member for shielding electromagnetic noise from entering the inside of the pack case.

CN205542913U provides a safe fire prevention heat dissipation aluminum-shell battery module, include aluminum -shell battery subassembly and the fused connecting strip that is used for connecting the aluminum -shell battery subassembly, both ends are provided with anodal utmost point post, negative terminal respectively about the aluminum -shell battery subassembly, be provided with on the aluminum -shell battery subassembly and admit air and evacuating valve, safety explosion -proof valve, fin, the aluminum -shell battery subassembly is built -in to be had electric core and puts out a fire the layer, this battery module is according to the working characteristics of lithium ion, through reasonable construction improvement, especially through put out a fire the layer with admit air and evacuating valve, safety explosion -proof valve, the design of fin matched with, when the battery took place the explosion of short circuit catching fire, melted under high temperature on the layer of putting out a fire, the fire extinguishing agent on the layer of putting out a fire just can cover at electric core surperficially, prevents or reduces the danger of battery combustion and explosion.

CN105810859A provides a secondary battery top cover and a secondary battery. The secondary battery top cover comprises a top cover board, an anti-explosion valve and a flame-retardant device, wherein the top cover board is provided with an anti-explosion hole, the anti-explosion valve is arranged on the top cover board and seals the anti-explosion hole, the flame-retardant device corresponding to the anti-explosion valve in position is positioned below the top cover board and comprises a flame-retardant box with a cavity and a flame-retardant agent arranged in the cavity, and an exhaust passage is reserved between the flame-retardant device and the anti-explosion valve. When reaching a melting point, the flame-retardant box melts and releases the flame retardant. The secondary battery top cover and the secondary battery have the advantages that by the aid of the flame-retardant device provided with the flame retardant, when the battery generates a great quantity of gas and temperature rises sharply due to accidents caused by improper battery charging, short circuit, striking, exposure to high-temperature severe environments or the like, the flame-retardant device melts by being heated and releases the flame retardant into a battery core, so that flammability of electrolyte is reduced and safety performance of the battery is improved.

EP2704802A0 provides a battery housing comprising an inner chamber for accommodating galvanic cells, in particular lithium-ion cells, which are provided with a cut-out area that can be opened in the event of failure of the cell. In order to prevent, retard and optionally at least partially extinguish a fire in the event of the failure of one or more cells, for example during an accident of an electrically operated vehicle, the inner chamber of the battery housing comprises at least one dispenser for dispensing a flame-inhibiting, flame-retarding and/or flame-extinguishing agent, wherein the dispenser has at least one dispenser opening, which can be or is arranged adjacent to a cut-out area of a cell and which can be opened, wherein the dispenser opening can be opened during a mechanical shock and/or a temperature increase and/or a pressure increase above a predetermined limit value. The invention further relates to a dispenser, to a galvanic cell and to a battery.

CN207474524U provides vehicle and battery box, battery module, part of putting out a fire, container of putting out a fire thereof. The battery is put out a fire the container and is had the fire extinguishing agent and hold the chamber, the fire extinguishing agent hold be equipped with on the chamber wall in chamber be used for with cell on the cell blast resistant construction correspond set up with the battery blast resistant construction of opening the pressure release when the cell blast resistant construction is opened with be used for the fire extinguishing agent hold open the pressure release when cavity pressure reaches the setting value hold the chamber blast resistant construction. After cell internal pressure exceeded the setting value, the pressure release was opened to the cell blast resistant construction, and spun high -pressure fluid washes the battery blast resistant construction open, and the fire extinguishing agent holds the fire extinguishing agent outflow of intracavity and puts out a fire to cell. The cell blast resistant construction pressure is too big in the twinkling of an eye the time, hold the chamber blast resistant construction and is washed open, prevent the inside too big cell of leading to of the pressure explosion of cell, solve present battery and put out a fire the container and cause the toobig problem that causes the explosion of electric core of cell internal pressure easily.

### SUMMARY

The invention is set out in the appended set of claims.

In view of the deficiencies of the prior art, an objective of the invention is to provide a battery pack, which can ensure that a fire extinguishing agent quickly reaches a runaway area when a battery occurs a thermal runaway, and suppresses the thermal runaway of the battery.

In order to achieve the above objective, the invention provides a battery pack, which includes a plurality of batteries and a box, and the plurality of batteries are accommodated in the box; each battery includes an explosion-proof valve; the box includes a lower box for supporting the batteries and an upper box matching the lower box; the upper box includes an upper plate and a lower plate, the upper plate covers the lower plate to form an accommodating space for accommodating a fire extinguishing agent; the explosion-proof valve of the each battery faces the lower plate of the upper box, and the lower plate is set to be able to discharge the fire extinguishing agent from the accommodating space after being melted.

In one embodiment, the lower plate is provided with a weakened area, and the weakened area is opposite to the explosion-proof of the each battery.

In one embodiment, the plurality of batteries are set in rows, the lower plate is provided with the weakened area, and the weakened area covers an area formed by all explosion-proof valves of each battery row in a height direction.

In one embodiment, the weakened area is provided with a groove, so that a thickness of the weakened area is smaller than a thickness of other parts of the lower plate.

In one embodiment, the weakened area is provided with a score along its perimeter.

In one embodiment, the upper box further includes a partition wall, the accommodating space is divided into a plurality of accommodating cavities by the partition wall, and each accommodating cavity is opposite to the explosion-proof valve of the battery of each battery row V

In one embodiment, the upper box further includes a fireproof plate, disposed between an inner surface of the upper plate and the fire extinguishing agent.

In one embodiment, the fireproof plate is a mica plate.

In one embodiment, thicknesses of the lower plate is smaller than thicknesses of the upper plate.

In one embodiment, the lower plate comprises: a bottom wall; a side wall, extending upward from all sides of the bottom wall; and a flange, extending outward from all sides of the side wall, and the flange is fixedly connected to an inner surface of the upper plate.

The advantageous effects of the invention are as follows: in the battery package of the invention, when the battery occurs the thermal runaway (a high-temperature gas generated inside the battery breaks through the explosion-proof of the battery and then is discharged from the battery, in which the high-temperature gas rushing out of the explosion-proof valve may be accompanied by a flame or doped with a high temperature electrolyte), the generated high-temperature gas and/or flame could melt through a position of the lower plate of the upper box corresponding to the explosion-proof valve, thereby forming a melted area that is melted through on the lower plate and causing the fire extinguishing agent in the lower plate to flow rapidly from the melted area to the runaway area. On the one hand, the fire extinguishing agent cools the high-temperature gas and/or extinguishes the flame, and on the other hand, the discharged fire extinguishing agent enters the explosion-proof valve to reduce the temperature of the battery, thus inhibiting the thermal runaway of the battery.

### BRIEF DESCRIPTION OF DRAWINGS

FIG. 1 is an exploded perspective view of a battery pack of the invention.
FIG. 2 is a sectional view of the battery pack in FIG. 1.
FIG. 3 is an enlarged view of a part Ain FIG. 2, which shows a state of a discharged fire extinguishing agent after a lower plate is melted.
FIG. 4 is an exploded perspective view of an upper box of the battery pack in FIG. 1.
FIG. 5 is a perspective view of an upper cover of the battery pack in FIG. 1 from another angle.
FIG. 6 is a partial cross-sectional view of the upper box of the battery pack in FIG. 5.
FIG. 7 is a perspective view of the first embodiment of the upper box of the battery pack of the invention.
FIG. 8 is a perspective view of the second embodiment of the upper box of the battery pack of the invention.
FIG. 9 is a perspective view of the third embodiment of the upper box of the battery pack of the invention.
FIG. 10 is a perspective view of the fourth embodiment of the upper box of the battery pack of the invention.
FIG. 11 is a perspective view of the fifth embodiment of the upper box of the battery pack of the invention.
FIG. 12 is a perspective view of the sixth embodiment of the upper box of the battery pack of the invention.

### Reference signs are explained as follows:

| | | | |
|---|---|---|---|
| 1 | battery | 222D | flange |
| 11 | explosion-proof valve | 223 | partition wall |
| 12 | pole | 224 | fireproof plate |
| 2 | box | 225 | second edge portion |
| 21 | lower box | 3 | fire extinguishing agent |
| 211 | first edge portion | S | accommodating space |
| 22 | upper box | S1 | accommodating cavity |
| 221 | upper plate | R | groove |
| 222 | lower plate | V | battery row |
| 222A | weakened area | M | melted area |
| 222B | bottom wall | H | height direction |
| 222C | side wall | L W | length direction width direction |

### DESCRIPTION OF EMBODIMENTS

Embodiments of the invention are shown in the drawings. Moreover, it will be appreciated that the disclosed embodiments are merely examples of the invention. The invention may be implemented in various forms. Therefore, specific details disclosed herein are not to be interpreted as limiting, but merely as a basis of claims, and as a representative basis for teaching those skilled in the art to implement the invention in various ways.

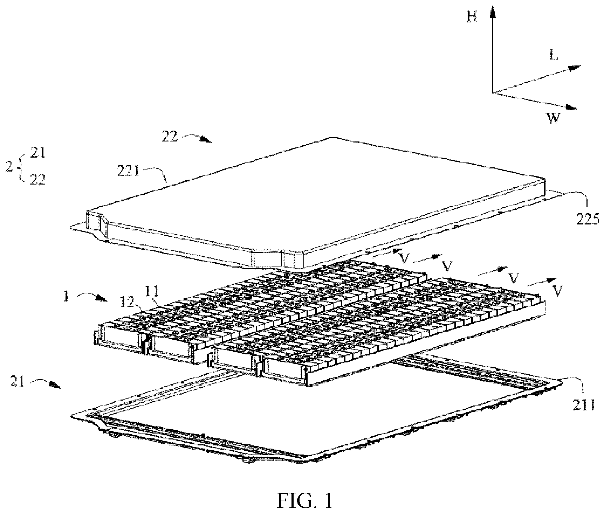

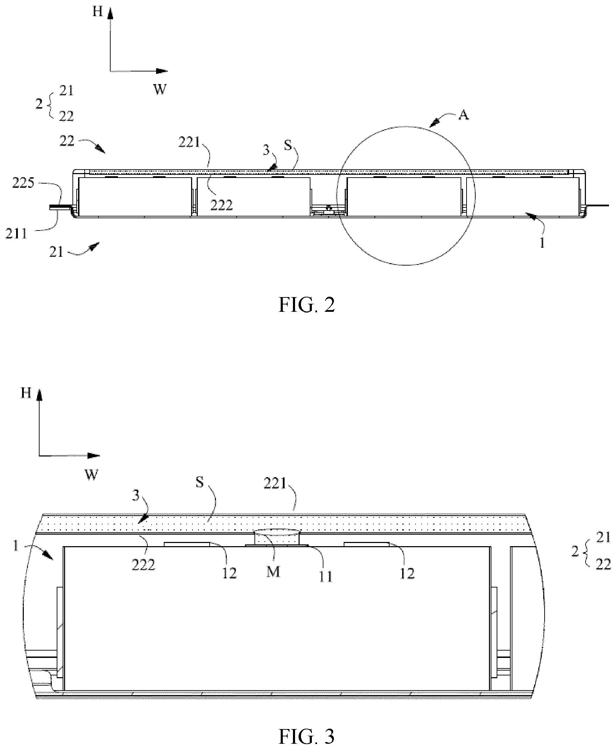

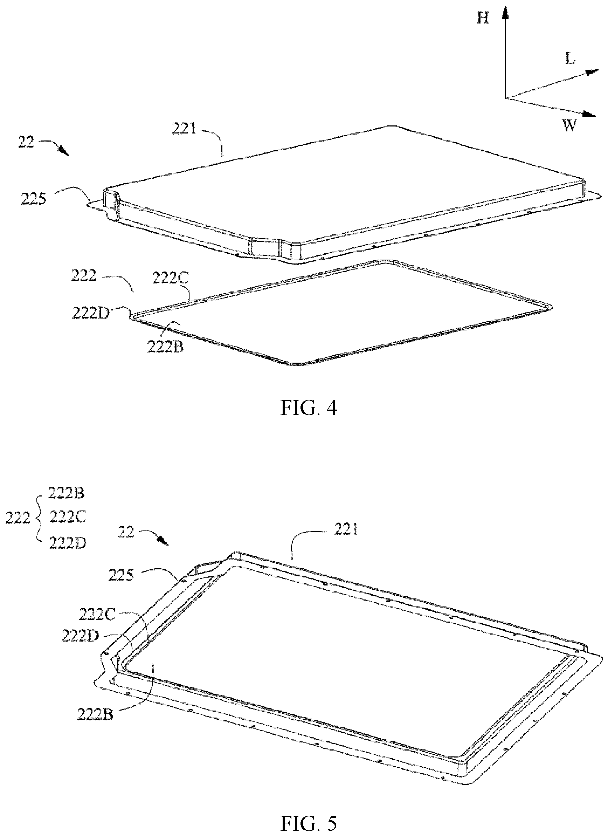

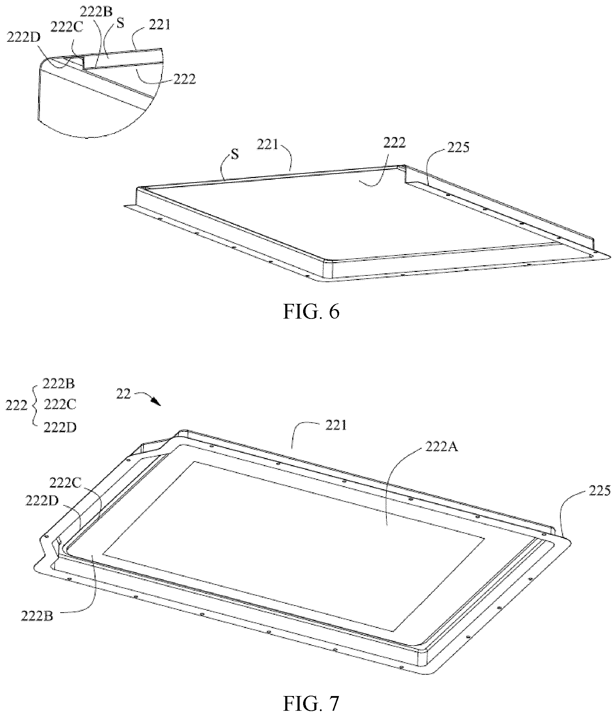

FIG. 1 is an exploded perspective view of a battery pack of the invention. FIG. 2 is a sectional view of the battery pack in FIG. 1. FIG. 3 is an enlarged view of a part A in FIG. 2, which shows a state of a discharged fire extinguishing agent after a lower plate is melted. FIG. 4 is an exploded perspective view of an upper box of the battery pack in FIG. 1. FIG. 5 is a perspective view of an upper cover of the battery pack of FIG. 1 from another angle. FIG. 6 is a partial cross-sectional view of the upper box of the battery pack in FIG. 5.

The battery pack of the invention includes a plurality of batteries 1 and a box 2, and the plurality of batteries 1 are accommodated in the box 2; each battery 1 includes an explosion-proof valve 11; the box 2 includes a lower box 21 for supporting batteries 1 and an upper box 22 matching the lower box 21; the upper box 22 includes an upper plate 221 and a lower plate 222, the upper plate 221 covers the lower plate 222 to form an accommodating space S for accommodating a fire extinguishing agent 3; the explosion-proof valve 11 of each battery 1 faces the lower plate 222 of the upper box 22, and the lower plate 222 is set to be able to discharge the fire extinguishing agent 3 from the accommodating space S after being melted. The lower box 21 includes a first edge portion 211, the upper box 22 includes a second edge portion 225, and the first edge portion 211 is connected to the second edge portion 225. The first edge portion 211 and the second edge portion 225 can be connected by such ways as rivet connection, bolt connection, buckle connection, or glue connection.

In the battery pack of the invention, with reference to FIGS. 1 to 3, when the battery 1 occurs a thermal runaway (a high-temperature gas generated inside the battery 1 breaks through the explosion-proof 11 of the battery 1 and then is discharged from the battery 1, in which the high-temperature gas rushing out of the explosion-proof valve 11 may be accompanied by a flame or doped with a high temperature electrolyte), the generated high-temperature gas and/or the flame could melt through a position of the lower plate 222 of the upper box 22 corresponding to the explosion-proof valve 11, thereby forming a melted area M that is melted through on the lower plate 222 and causing the fire extinguishing agent 3 in the lower plate 222 to flow rapidly from the melted area M to a runaway area. On the one hand, the fire extinguishing agent 3 cools the high-temperature gas and/or extinguishes the flame, and on the other hand, the discharged fire extinguishing agent 3 enters the explosion-proof valve 11 to reduce the temperature of the battery 1, thus inhibiting the thermal runaway of the battery.

The battery 1 is a hard shell battery (or referred to a can-type battery), including an electrode assembly (not shown), a housing, a top cover, the explosion-proof valve 11 and a pole 12. An accommodating cavity is formed inside the housing to accommodate the electrode assembly and an electrolyte. The electrode assembly includes a positive electrode plate, a negative electrode plate and a separator separating the positive electrode plate and the negative electrode plate. The electrode assembly can be formed by winding the positive electrode plate, the negative electrode plate and the separator, or stacking the positive electrode plate, the negative electrode plate and the separator. Both the positive electrode plate and the negative electrode plate include a current collector, and an active material layer disposed on the current collector.

With reference to FIGS. 4 to 11, the lower plate 222 includes: a bottom wall 222B; a side wall 222C, extending upward from all sides of the bottom wall 222B; and a flange 222D, extending outward from all sides of the side wall 222C, and the flange 222D is fixedly connected to an inner surface of the upper plate 221. The flange 222D can be fixedly connected to the inner surface of the upper plate 221 by means of screw connection, bolt connection, rivet connection or glue connection for sealing and fixing.

The material of the lower plate 222 can be a material with a melting point of 200 ~ 500°C , such as aluminum, to ensure that the lower plate 222 can be timely melted through and discharge the fire extinguishing agent 3 when the battery 1 occurs the thermal runaway, so that the fire extinguishing agent 3 can quickly flow to the runaway area to inhibit the thermal runaway.

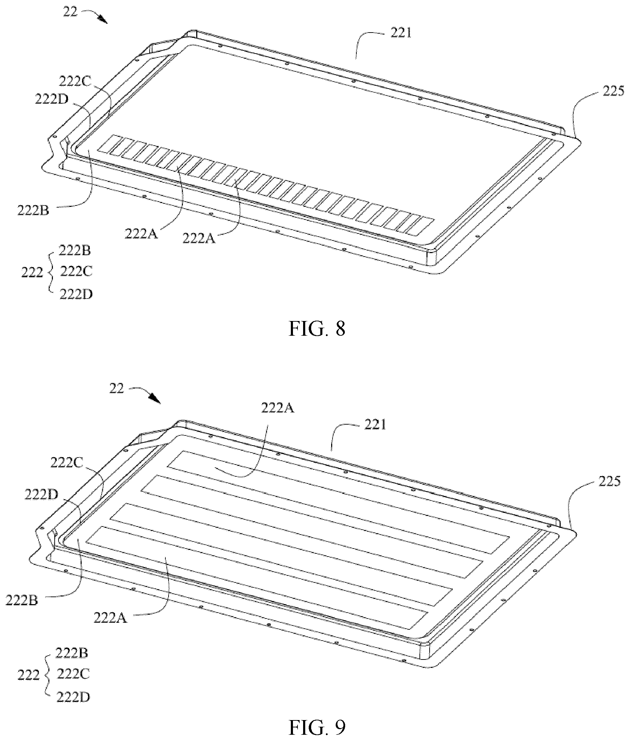

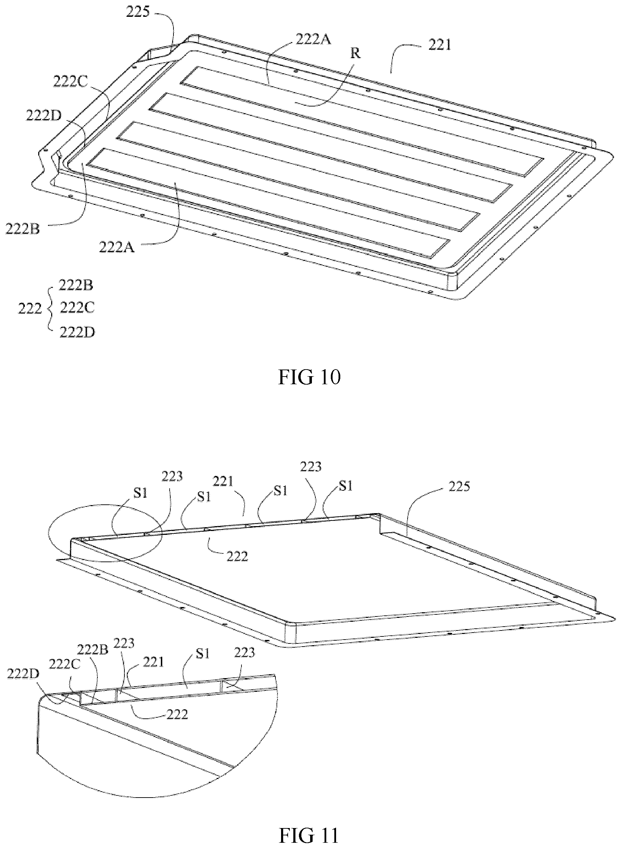

FIG. 7 is a perspective view of the first embodiment of the upper box of the battery pack of the invention. FIG. 8 is a perspective view of the second embodiment of the upper box of the battery pack of the invention. FIG. 9 is a perspective view of the third embodiment of the upper box of the battery pack of the invention. FIG. 10 is a perspective view of the fourth embodiment of the upper box of the battery pack of the invention.

With reference to the embodiments shown in FIGS. 7 to 10, in order to further ensure that the lower plate 222 fully functions, the lower plate 222 is provided with a weakened area 222A, and the weakened area 222A is opposite to the explosion-proof 11 of each battery 1. The number of the weakened areas 222A can be one or multiple. According to the first embodiment shown in FIG. 7, the lower plate 222 is provided with one weakened area 222A, which covers an area formed by the explosion-proof valves 11 of all the batteries 1, without setting multiple weakened areas 222A, to reduce procedures of processing the lower plate 222. According to the second embodiment shown in FIG. 8, the lower plate 222 is provided with multiple weakened areas 222A, and each weakened area 222A covers an area formed by the explosion-proof valve 11 of each battery 1 (for clarity, only a part of the weakened areas 222A shown in FIG. 8). Each weakened area 222A corresponding to each explosion-proof valve 11 is separated to avoid unnecessary waste caused by excessive diffusion of a melted area M and excessive discharge of the fire extinguishing agent 3 due to the fusibility of the weakened area 222A. According to the third embodiment shown in FIG. 9, multiple batteries 1 are set in rows. The weakened area 222A is disposed on the lower plate 222 on the basis of battery row V, which covers an area formed by all explosion-proof valves 11 of each battery row V in a height direction. The row number of the battery rows V corresponding to the weakened area 222Ais not limited and can be set flexibly. Multiple weakened areas 222A can be arranged on the lower plate 222, one weak area 222A corresponds to multiple battery rows V, and the set number of the weakened areas 222A can be selected according to specific needs. According to the fourth embodiment shown in FIG. 10, the weakened area 222A can be provided with a groove R so that a thickness of the weakened area 222A is smaller than a thickness of other parts of the lower plate 222, so as to ensure that the weakened area 222A corresponding to the explosion-proof valve 11 of the battery 1 occurring the thermal runaway quickly melts and discharges the fire extinguishing agent 3 in a short time. In order to ensure that the weakened area 222A is smoothly broken through, the weakened area 222A is provided with a score (not shown) along its perimeter. The groove R or the score are provided to enhance the effect of the weakened area 222A, so as to ensure that the lower plate 222 fully functions.

FIG. 11 is a perspective view of the fifth embodiment of the upper box of the battery pack of the invention.

With reference to the fifth embodiment shown in FIG. 11, the upper box 22 further includes a partition wall 223, the accommodating space S is divided into a plurality of accommodating cavities S1 by the partition wall 223, each accommodating cavity S1 is opposite to the explosion-proof valves 11 of the batteries 1 of each battery row V for separate management. Since a thermal runaway chain reaction is most likely to occur between the batteries 1 of each battery row V, the corresponding accommodating cavity S1 is respectively disposed on the lower plate 222 for each battery row V, so that the fire extinguishing agent 3 in each accommodating cavity S1 mainly deals with the thermal runaway of the corresponding battery row V, and the fire extinguishing agent 3 can quickly flow to a thermal away area.

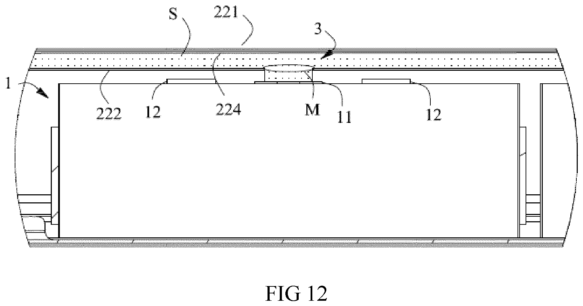

FIG. 12 is a perspective view of the sixth embodiment of the upper box of the battery pack of the invention.

According to the sixth embodiment shown in FIG. 12, the upper box 22 can further include a fireproof plate 224 disposed between the inner surface of the upper plate 221 and the fire extinguishing agent 3 to extend the time before the high-temperature gas and/or flame sprayed out when the battery 1 occurs the thermal runaway burn through the upper plate 221, so that the fire extinguishing agent 3 has enough time to fully cool down and extinguish the fire. And it can also be realized by designing thickness of the lower plate 222 to be smaller than thickness of the upper plate 221. Among them, the fireproof board 224 can be selected from a mica cloth, which has a high melting point and a high temperature resistance. The fireproof board 224 can be fixed on the inner surface of the upper plate 221.

The fire extinguishing agent 3 can be a dry powder fire extinguishing agent or can choose a fire extinguishing fluid with high latent heat, high specific heat capacity and good insulation.

## Claims

1. Battery pack, comprising:
a plurality of batteries (1) and a box (2), wherein
the plurality of batteries (1) accommodated in the box (2); and
each of the plurality of batteries (1) comprises an explosion-proof valve (11);
the box (2) comprises a lower box (21) and an upper box (22) matching the lower box (21), wherein the lower box (21) supports the plurality of batteries (1),
wherein the upper box (22) comprises an upper plate (221) and a lower plate (222), the upper plate (221) covers the lower plate (222) to form an accommodating space (S) for accommodating a fire extinguishing agent (3);
the explosion-proof valve (11) of the each battery (1) faces the lower plate (222) of the upper box (22), wherein the lower plate (222) is set to be able to discharge the fire extinguishing agent (3) from the accommodating space (S) after the lower plate (222) being melted;
wherein the lower plate (222) is provided with a weakened area (222A), and the weakened area (222A) is opposite to the explosion-proof valve (11) of the each battery (1).

2. Battery pack according to claim 1, wherein the lower plate (222) is provided with one weakened area (222A), and the weakened area (222A) is opposite to all explosion-proof valves (11) of the plurality of batteries (1).

3. Battery pack according to claim 1, wherein the lower plate (222) is provided with a plurality of weakened areas (222A), and each of the plurality of weakened areas (222A) is opposite to an explosion-proof valve (11) of one of the plurality of batteries (1).

4. Battery pack according to claim 1, wherein the plurality of batteries (1) are set to multiple battery rows (V), the lower plate (222) is provided with a plurality of weakened areas (222A), and each of the plurality of weakened areas (222A) covers an area formed by explosion-proof valves (11) of one of the multiple battery rows (V) in a height direction.

5. Battery pack according to any one of claims 1 to 4, wherein a weakened area (222A) is provided with a groove (R), so that a thickness of the weakened area (222A) is smaller than a thickness of other parts of the lower plate (222).

6. Battery pack according to any one of claims 1 to 5, wherein along the perimeter of
the weakened area (222A), a score is provided.

7. Battery pack according to claim 4, wherein the upper box (22) further comprises a partition wall (223), the accommodating space (S) is divided into a plurality of accommodating cavities (S1) by the partition wall (223), each accommodating cavity (S1) is opposite to explosion-proof valves (11) of batteries (1) of each battery row (V).

8. Battery pack according to any one of claims 1 to 7, wherein the upper box (22) further comprises a fireproof plate (224) disposed between an inner surface of the upper plate (221) and the fire extinguishing agent (3).

9. Battery pack according to claim 8, wherein the fireproof plate (224) is a mica plate.

10. Battery pack according to any one of claims 1 to 9, wherein a thickness of the lower plate (222) is smaller than a thickness of the upper plate (221).

11. Battery pack according to any one of claims 1 to 10, wherein the lower plate (222) comprises:
a bottom wall (222B);
a side wall (222C), extending upward from all sides of the bottom wall (222B); and
a flange (222D), extending outward from all sides of the side wall (222C), and the flange (222D) is fixedly connected to an inner surface of the upper plate (221).

12. Battery pack according to claim 11, wherein the flange (222D) is fixedly connected to the inner surface of the upper plate (221) by means of screw connection, bolt connection, rivet connection or glue connection.

13. Battery pack according to any one of claims 1 to 12, wherein the lower box (21) includes a first edge portion (211), the upper box (22) includes a second edge portion (225), and the first edge portion (211) is connected to the second edge portion (225).

14. Battery pack according to any one of claims 1 to 13, wherein a material of the lower plate (222) is a material with a melting point of 200 ~ 500 ° C .

## Patentansprüche

1. Batteriepack, umfassend: eine Vielzahl von Batterien (1) und eine Box (2), wobei die Vielzahl von Batterien (1) in der Box (2) untergebracht ist; und jede der Vielzahl von Batterien (1) umfasst ein explosionsgeschütztes Ventil (11); die Box (2) umfasst eine untere Box (21) und eine obere Box (22), die zur unteren Box (21) passt, wobei die untere Box (21) die Vielzahl von Batterien (1) stützt, wobei die obere Box (22) eine obere Platte (221) und eine untere Platte (222) umfasst, die obere Platte (221) bedeckt die untere Platte (222), um einen Aufnahmebereich (S) für ein Feuerlöschmittel (3) zu bilden; das explosionsgeschützte Ventil (11) jeder Batterie (1) zeigt zur unteren Platte (222) der oberen Box (22), wobei die untere Platte (222) so eingestellt ist, dass sie das Feuerlöschmittel (3) aus dem Aufnahmebereich (S) entlassen kann, nachdem die untere Platte (222) geschmolzen ist; wobei die untere Platte (222) mit einer Schwachstelle (222A) versehen ist, und die Schwachstelle (222A) ist gegenüber dem explosionsgeschützten Ventil (11) jeder Batterie (1).

2. Batteriepack nach Anspruch 1, wobei die untere Platte (222) mit einer Schwachstelle (222A) versehen ist, und die Schwachstelle (222A) ist gegenüber allen explosionsgeschützten Ventilen (11) der Vielzahl von Batterien (1).

3. Batteriepack nach Anspruch 1, wobei die untere Platte (222) mit einer Vielzahl von Schwachstellen (222A) versehen ist, und jede der Vielzahl von Schwachstellen (222A) ist gegenüber einem explosionsgeschützten Ventil (11) einer der Vielzahl von Batterien (1).

4. Batteriepack nach Anspruch 1, wobei die Vielzahl von Batterien (1) in mehrere Batteriereihen (V) eingestellt ist, die untere Platte (222) ist mit einer Vielzahl von Schwachstellen (222A) versehen, und jede der Vielzahl von Schwachstellen (222A) bedeckt eine Fläche, die durch explosionsgeschützte Ventile (11) einer der mehreren Batteriereihen (V) in einer Höhenrichtung gebildet wird.

5. Batteriepack nach einem der Ansprüche 1 bis 4, wobei eine Schwachstelle (222A) mit einer Nut (R) versehen ist, sodass die Dicke der Schwachstelle (222A) kleiner ist als die Dicke anderer Teile der unteren Platte (222).

6. Batteriepack nach einem der Ansprüche 1 bis 5, wobei entlang des Umfangs der Schwachstelle (222A) eine Kerbe vorgesehen ist.

7. Batteriepack nach Anspruch 4, wobei die obere Box (22) weiterhin eine Trennwand (223) umfasst, der Aufnahmebereich (S) ist durch die Trennwand (223) in eine Vielzahl von Aufnahmekammern (S1) unterteilt, jede Aufnahmekammer (S1) ist gegenüber explosionsgeschützten Ventilen (11) von Batterien (1) jeder Batteriereihe (V).

8. Batteriepack nach einem der Ansprüche 1 bis 7, wobei die obere Box (22) weiterhin eine feuerfeste Platte (224) umfasst, die zwischen einer Innenoberfläche der oberen Platte (221) und dem Feuerlöschmittel (3) angeordnet ist.

9. Batteriepack nach Anspruch 8, wobei die feuerfeste Platte (224) eine Glimmerplatte ist.

10. Batteriepack nach einem der Ansprüche 1 bis 9, wobei die Dicke der unteren Platte (222) kleiner ist als die Dicke der oberen Platte (221).

11. Batteriepack nach einem der Ansprüche 1 bis 10, wobei die untere Platte (222) umfasst: eine Bodenwand (222B); eine Seitenwand (222C), die sich von allen Seiten der Bodenwand (222B) nach oben erstreckt; und eine Flansch (222D), die sich von allen Seiten der Seitenwand (222C) nach außen erstreckt, und der Flansch (222D) ist fest mit einer Innenoberfläche der oberen Platte (221) verbunden.

12. Batteriepack nach Anspruch 11, wobei der Flansch (222D) fest mit der Innenoberfläche der oberen Platte (221) mittels Schraubverbindung, Bolzenverbindung, Nietverbindung oder Klebeverbindung verbunden ist.

13. Batteriepack nach einem der Ansprüche 1 bis 12, wobei die untere Box (21) einen ersten Randbereich (211) umfasst, die obere Box (22) umfasst einen zweiten Randbereich (225), und der erste Randbereich (211) ist mit dem zweiten Randbereich (225) verbunden.

14. Batteriepack nach einem der Ansprüche 1 bis 13, wobei das Material der unteren Platte (222) ein Material mit einem Schmelzpunkt von 200 ∼ 500 °C ist.

## Revendications

1. Bloc-batteries, comprenant :
une pluralité de batteries (1) et un boîtier (2), dans lequel
la pluralité de batteries (1) sont logées dans le boîtier (2) ; et
chacune de la pluralité de batteries (1) comprend une valve antidéflagrante (11) ;
le boîtier (2) comprend un boîtier inférieur (21) et un boîtier supérieur (22) adapté au boîtier inférieur (21), le boîtier inférieur (21) supportant la pluralité de batteries (1),
dans lequel le boîtier supérieur (22) comprend une plaque supérieure (221) et une plaque inférieure (222), la plaque supérieure (221) recouvre la plaque inférieure (222) pour former un espace de logement (S) pour loger un agent extincteur d'incendie (3) ;
la valve antidéflagrante (11) de chaque batterie (1) fait face à la plaque inférieure (222) du boîtier supérieur (22), la plaque inférieure (222) étant établie pour pouvoir évacuer l'agent extincteur d'incendie (3) depuis l'espace de logement (S) après que la plaque inférieure (222) a fondu ;
dans lequel la plaque inférieure (222) est dotée d'une zone affaiblie (222A), et la zone affaiblie (222A) est opposée à la valve antidéflagrante (11) de chaque batterie (1).

2. Bloc-batteries selon la revendication 1, dans lequel la plaque inférieure (222) est dotée d'une zone affaiblie (222A), et la zone affaiblie (222A) est opposée à toutes les valves antidéflagrantes (11) de la pluralité de batteries (1).

3. Bloc-batteries selon la revendication 1, dans lequel la plaque inférieure (222) est dotée d'une pluralité de zones affaiblies (222A), et chacune de la pluralité de zones affaiblies (222A) est opposée à une valve antidéflagrante (11) de l'une de la pluralité de batteries (1).

4. Bloc-batteries selon la revendication 1, dans lequel la pluralité de batteries (1) sont établies en de multiples rangées de batteries (V), la plaque inférieure (222) est dotée d'une pluralité de zones affaiblies (222A), et chacune de la pluralité de zones affaiblies (222A) recouvre une zone formée par des valves antidéflagrantes (11) de l'une des multiples rangées de batteries (V) dans une direction de hauteur.

5. Bloc-batteries selon l'une quelconque des revendications 1 à 4, dans lequel une zone affaiblie (222A) est munie d'une rainure (R), de sorte qu'une épaisseur de la zone affaiblie (222A) est inférieure à une épaisseur d'autres parties de la plaque inférieure (222).

6. Bloc-batteries selon l'une quelconque des revendications 1 à 5, dans lequel le long du périmètre de la zone affaiblie (222A), une marque est prévue.

7. Bloc-batteries selon la revendication 4, dans lequel le boîtier supérieur (22) comprend en outre une paroi de séparation (223), l'espace de logement (S) est divisé en une pluralité de cavités de logement (51) par la paroi de séparation (223), chaque cavité de logement (51) est opposée aux valves antidéflagrantes (11) de batteries (1) de chaque rangée de batteries (V).

8. Bloc-batteries selon l'une quelconque des revendications 1 à 7, dans lequel le boîtier supérieur (22) comprend en outre une plaque ignifuge (224) disposée entre une surface interne de la plaque supérieure (221) et l'agent extincteur d'incendie (3).

9. Bloc-batteries selon la revendication 8, dans lequel la plaque ignifuge (224) est une plaque de mica.

10. Bloc-batteries selon l'une quelconque des revendications 1 à 9, dans lequel une épaisseur de la plaque inférieure (222) est inférieure à une épaisseur de la plaque supérieure (221).

11. Bloc-batteries selon l'une quelconque des revendications 1 à 10, dans lequel la plaque inférieure (222) comprend :
une paroi de fond (222B) ;
une paroi latérale (222C), s'étendant vers le haut depuis tous les côtés de la paroi de fond (222B) ; et
une bride (222D), s'étendant vers l'extérieur depuis tous les côtés de la paroi latérale (222C), et la bride (222D) est reliée de manière fixe à une surface interne de la plaque supérieure (221).

12. Bloc-batteries selon la revendication 11, dans lequel la bride (222D) est reliée de manière fixe à la surface interne de la plaque supérieure (221) au moyen d'une connexion par vis, d'une connexion par écrou, d'une connexion par rivet ou d'une connexion par colle.

13. Bloc-batteries selon l'une quelconque des revendications 1 à 12, dans lequel le boîtier inférieur (21) comprend une première partie de bord (211), le boîtier supérieur (22) comprend une seconde partie de bord (225), et la première partie de bord (211) est reliée à la seconde partie de bord (225).

14. Bloc-batteries selon l'une quelconque des revendications 1 à 13, dans laquelle un matériau de la plaque inférieure (222) est un matériau ayant un point de fusion de 200 à environ 500 °C.
